# EUROPEAN PATENT APPLICATION

(11) **EP 2 937 541 A1**
(43) Date of publication of application: **28.10.2015**
(21) Application number: 13865086.6
(22) Date of filing: 18.12.2013
(51) Int. Cl.: F02B 77/08, G01M 15/04

(54) **MEASURING IMPLEMENT, MEASURING SYSTEM AND MEASURING METHOD**

(30) Priority: 19.12.2012 JP 2012276955
(71) Applicant: Imagineering, Inc., Kobe-shi, Hyogo 6500-047 (JP)
(72) Inventor: IKEDA Yuji, Kobe-shi Hyogo 650-0047 (JP); SERIZAWA Takeshi, Ikeda-shi Osaka 563-8651 (JP); UCHIDA Katsumi, Ikeda-shi Osaka 563-8651 (JP)
(74) Representative: Smith, Matthew
(86) International application number: PCT/JP2013/083981
(87) International publication number: WO 2014/098156

(57) **Abstract**

[Problem] To provide a measuring equippment which can be easily mounted to an internal combustion engine.

[Solution] A measuring equippment (30) is equipped with: a measurement container (31) having formed therein a chamber (34) to be measured, into which a gas to be measured enters, and an inlet passage, through which the gas to be measured is introduced into the chamber (34) to be measured; and a connection structure (32) which, when a plug is not mounted to a plughole (25) that opens into a combustion chamber (24) in an internal combustion engine (20), connects the inlet passage to the plughole(25). The measurement container (31) may be provided with a plasma generation device (45), which generates plasma in the chamber (34) to be measured, or a mounting structure for mounting a heating device, which heats the gas to be measured in the chamber (34) to be measured.

## Description

### TECHNICAL FIELD

The present invention relates to measuring implement that is used for measurement for analyzing an internal combustion engine.

### BACKGROUND ART

There are various measuring implements for analyzing an internal combustion engine. For example, non-patent document 1 discloses a measuring chamber having interior space that serves as a sub-combustion chamber of the internal combustion engine. The sub-combustion chamber is connected to a main combustion chamber of the internal combustion engine via a connection hole in the side wall of the main combustion chamber. A strong jet stream is introduced into the sub-combustion chamber by movement of a piston and a flow field accompanied by the strong flow is then formed inside the sub-combustion chamber. The flow field of the gas inside the sub-combustion chamber can be measured by visualization techniques.

### PRIOR ART DOCUMENTS

### PATENT DOCUMENTS

Non-Patent Document 1: "Flame Structure in In-Cylinder Flow Field Controlled by Opposed Jets", K.Kuwahara et.al. 11th internal Combustion Symposium (1993) pp.109-114 (In Japanese)

### THE DISCLOSURE OF THE INVENTION

### PROBLEMS TO BE SOLVED BY THE INVENTION

However, the conventional measuring implement needs to be installed in the lateral side of the main combustion chamber which has a large spatial limitation among the outside space of the internal combustion engine. Therefore, it was difficult to attach the measuring implement to the internal combustion engine.

In view of the above described circumstances, the present disclosure provides a measuring implement which is convenient for attaching to the internal combustion engine.

### MEANS FOR SOLVING THE PROBLEMS

A measuring implement of the present disclosure comprises a measuring chamber including a measurement room to where a target measurement gas flows in, and an introductory passage that introduces the target measurement gas to the measurement room; and a connection structure that connects the introductory passage to a plughole, where the plughole is opened in a combustion chamber of an internal combustion engine and a plug is not installed in the plughole.

A measuring method of the present disclosure relates to a measuring method using a measuring chamber including a measurement room to where a target measurement gas flows in, and an introductory passage that introduces the target measurement gas to the measurement room. This method comprises: a preparation step that connects the introductory passage of the measuring chamber to a plughole, where a plug is not installed in the plughole of an internal combustion engine, and connects a combustion chamber of the internal combustion engine and the measurement room via the plughole and the introductory passage; and a measuring step that operates the internal combustion engine after the preparation step and measures the target measurement gas, wherein the target measurement gas is the gas in the combustion chamber which is introduced into the measurement room via the plughole and the introductory passage.

### ADVANTAGE OF THE INVENTION

The measuring implement of the present disclosure allows locating the measuring implement in the space where the spatial restriction is small among an outside space of an internal combustion engine. This allows a convenience attachment of the measuring implement to the internal combustion engine.

### BRIEF DESCRIPTION OF THE DRAWINGS

Figure 1 is a schematic structure diagram of a measuring implement of a measuring system of an embodiment.
Figure 2 is a longitudinal sectional view of a measuring chamber of an embodiment at the spark plug position.

### DETAILED DESCRIPTION

In the following, a detailed description will be given by an embodiment of the present invention with reference to the accompanying drawings. It should be noted that the following embodiments are merely preferable examples, and do not limit the scope of the present invention, applied field thereof, or application thereof.

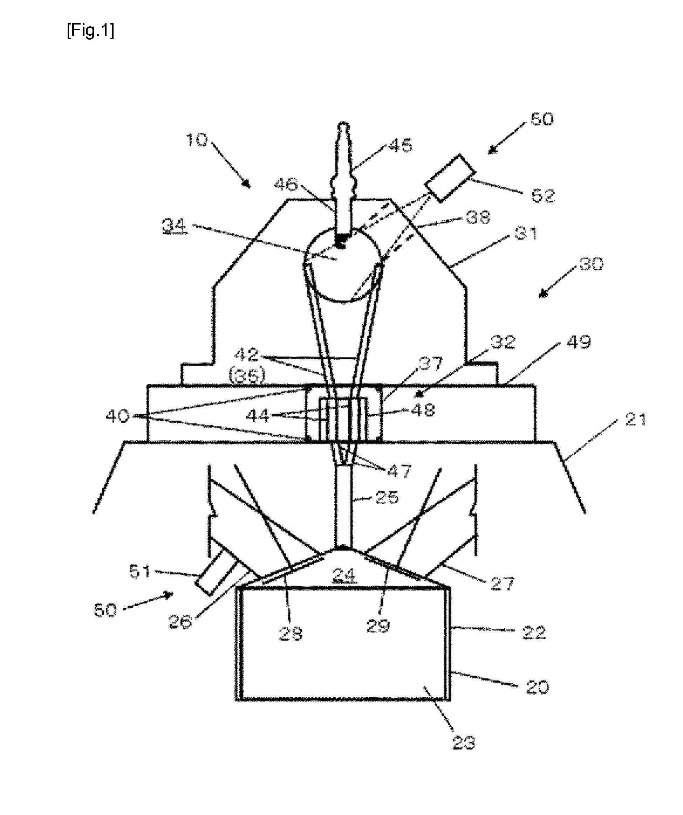

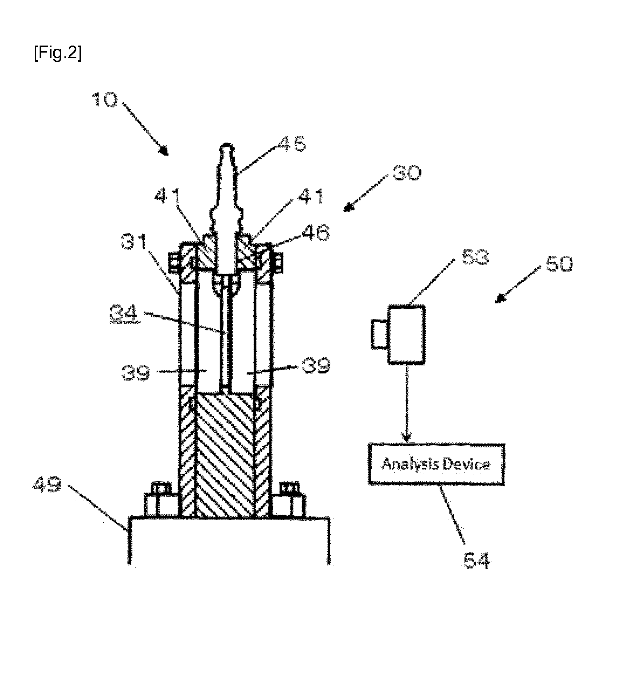

The present embodiment relates to measuring system 10 equipping measuring implement 30 of the present invention. Measuring implement 30 is an example of the present invention. Prior to the discussion of measuring implement 30 and measuring system 10, internal combustion engine 20 will be explained hereafter. Fig. 1 is a schematic structure diagram of measuring implement 30 of measuring system 10 when it is viewed from the front side. Figure 2 is a longitudinal sectional view of a measuring chamber 31 of measuring implement 30 in the position of spark plug 45. Fig. 2 is a longitudinal sectional view of measuring chamber 31 that is sectioned in the vertical direction of measurement room 34.

### Internal combustion engine

Internal combustion engine 20 is a reciprocating type internal combustion engine as shown in Fig. 1. Internal combustion engine 20 includes cylinder head 21, cylinder 22, and piston 23. Cylinder 22 is formed on a cylinder block (not illustrated). Piston 23 is formed inside cylinder 22 and reciprocates freely. Cylinder head 21, cylinder 22, and piston 23 define the combustion chamber 24. When piston 23 reciprocates in cylinder 22 in the axial direction of cylinder 22, a reciprocation movement of piston 23 is converted to a rotational movement by a connecting rod (not illustrated).

Plughole 25 is formed in cylinder head 21 for attaching a spark plug. Inner end of plughole 25 is opened toward combustion chamber 24. Inlet port 26 and exhaust port 27 that are formed in cylinder head 21 so as to open toward combustion chamber 24. Intake valve 28 and an injector (not illustrated) are provided in inlet port 26. In contrast, exhaust valve 29 is formed in exhaust port 27.

### Measuring system

Measuring system 10 equips measuring implement 30 and measuring device 50. Measuring system 10 is for providing the measuring environment that is close to a condition in combustion chamber 24 of internal combustion engine 20.

Measuring implement 30 equips measuring chamber 31 and connection structure 32. Measuring chamber 31 forms therein a measuring room 34 to where the measurement gas flows inside, and an introductory passage 35 that introduces the measurement gas into measuring room 34. On the contrary, connection structure 32 has a structure that connects introductory passage 35 to plughole 25 where the spark plug is not attached in internal combustion engine 20. Measuring implement 30 will be detailed later.

Measuring device 50 is for measuring a flow field of a gas. Measuring device 50 is a measuring device that uses a PIV (Particle Image Velocimetry) method. The measuring device that is applicable to measuring system 10 shall not be limited to measuring device 50 of the present embodiment. As shown in Figs.1 and 2, measuring device 50 equips a particle feed unit 51 that supplies a tracer particle, a lighting installation 52 that forms a laser sheet, a capturing device 53 (a high speed camera) that photos measuring room 34, and an analysis device 54 that analyzes the images captured by capturing device 53.

Particle feed unit 51 supplies a tracer particle to the intake air that flows through inlet port 26 of internal combustion engine 20, for example. Lighting device 52 forms a laser sheet in measuring room 34 of measuring chamber 31. The photography device 53 photos the flow field of the measuring room 34. Analysis device 54 executes the analysis of flow field in measuring room 34 based on the image data acquired by the photo of capturing device 53, and then outputs the analysis result.

### Measuring implement

Measuring implement 30 will be detailed hereafter.

Measuring chamber 31 is so called an optical chamber, as shown in Figs. 1 and 2. Measuring chamber 31 is constituted by connecting a pair of facing components 41 mutually using a bolt, for example. In measuring chamber 31, circular measurement windows 39, e.g. fused quartz are provided respectively for each of the pair of facing components 41. Measuring room 34, having a circular section, is formed between measurement windows 39 in measuring chamber 31. Measuring room 34 is a cylindrical space surrounded by a flat measurement window 39. As shown in Fig. 1, optical introduction window 38 for introducing a laser sheet in measuring room 34 is formed on the side surface of measuring chamber 31. The geometries of measuring room 34 and measurement window 39 are not limited to the geometries of the present embodiment.

Tubular component 42, whose inner space is introductory passage 35, is provided between a pair of facing components 41 in measuring chamber 31. In this embodiment, two tubular components 42 are formed in measuring chamber 31. However, the numbers of tubular components 42 can be one, or can be three or more.

Each tubular component 42 is a straight piping. One end of each tubular component 42 opens toward measuring room 34 and the other end connect to a connection passage of connection structure 32. As shown in Fig. 1, each tubular component 42 is prolonged downward from measuring room 34, and is projected from the bottom surface of measuring chamber 31. The extension direction of each tubular component 42 coincides substantially in the tangential direction of the inner circumference wall of measuring room 34 at the upper edge position of tubular component 42. Two tubular components 42 are provided symmetrically against the center of measuring room 34.

In measuring room 34, a countering jet stream is formed by measurement gas emitted from two tubular components 42. The measurement gas that flowed from each tubular component 42 flows inside along the inner circumference wall of measuring room 34. The measurement gas that flowed from each tubular component 42 then collides in the upper part of measuring room 34.

In this embodiment, the cross-sectional channel size of introductory passage 35 is constant along the longitudinal direction of tubular component 42 for each tubular component 42. The cross-sectional channel size of introductory passage 35 is same for two tubular components 42. This allows a formation of a flow field ruled by a pair of strong vortex as a flow field that is similar to the flow field of tumble collapse process.

The cross-sectional channel size of introductory passage 35 can be designed differently between two tubular components 42. The flow field ruled by one strong vortex such as right revolution or left revolution can be formed in measuring room 34, as a flow field similar to a swirl, by setting appropriately the cross-sectional channel size of each introductory passage 35.

Spark plug 45, which is a plasma generating device, is attached to measuring chamber 31 as shown in Figs. 1 and 2. Chamber side plughole 46 is formed in measuring chamber 31 as an attachment structure for attaching spark plug 45. Chamber side plughole 46 is formed in the upper part of measuring chamber 31. The tip part of spark plug 45 is exposed above measuring room 34 in measuring chamber 31.

Connection structure 32 will be discussed hereafter. Connection structure 32 includes two connecting pipes 47, which are connection components for plughole 25 side, and pillar component 48 which is a connection component for measuring chamber 31 side. The numbers of the connection components shall not be limited to those in this embodiment. Connection structure 32 can be a single connection component that has a connection passage formed therein.

As shown in Fig. 1, two connecting pipes 47 are connected directly to the outer end (upper end in Fig. 1) of plughole 25. Two connecting pipes 47 are connected to plughole 25 using a seal component or a welding so that the gas came from combustion chamber 24 does not leak at the jointing section with plughole 25. Two connecting pipes 47 spread upper ward and stretches near the upper surface of cylinder head 21. The interior space of each connecting pipe 47 becomes a part of connection passage that connects plughole 25 and introductory passage 35.

Pillar component 48 is a pillar-shaped component that has two penetration holes 44 corresponding to two connecting pipes 47. Each penetration holes 44 becomes a part of the connection passage. Pillar component 48 is attached to the upper surface of cylinder head 21 so that each penetration holes 44 is connected directly to each connecting pipe 47. Each penetration holes 44 is connected directly to each tubular component 42 of measuring chamber 31. Instead of designing the cross-sectional channel size of introductory passage 35 differently for forming a flow field similar to a swirl flow, the cross-sectional channel size of each penetration holes 44 can be made different between the two tubular components 42. Multiple flow fields such as left revolution and right revolution can be formed easily by preparing multiple species of pillar components 48 without changing a design of the body of measuring implement 30.

In this embodiment, a plate-like pedestal 49 is provided on the upper surface of cylinder head 21 for installing measuring chamber 31 as shown in Fig. 1. Penetration hole 37 that accommodates pillar component 48 is formed in pedestal 49. Seal components 40, e.g. O-ring, seals respectively the upper end and lower end of penetration hole 37 in pedestals 49. The undersurface of pedestal 49 has a geometry corresponding to the upper surface of cylinder head 21. The upper surface of pedestal 49 is a flat surface. Measuring chamber 31 is fixed on the upper surface of pedestal 49.

### Measuring method

A measuring method using measuring system 10 will be discussed. The measuring method comprises a preparation step and a measuring step.

In the preparation step, two connecting pipes 47 are connected directly to plughole 25, where the spark plug is not attached, in internal combustion engine 20. Pillar component 48 is then attached to the upper surface of cylinder head 21 so that each penetration hole 44 of pillar component 48 is connected to each connecting pipe 47. Pedestal 49, to which seal component 40 is attached, is then installed on the upper surface of cylinder head 21 so as to surround pillar component 48. Thereafter, measuring chamber 31 is fixed to the upper surface of pedestal 49 so that each tubular component 42 is connected to each penetration hole 44 of pillar component 48. Through these operations, measuring chamber 31 is attached to internal combustion engine 20.

In the preparation step, an installation of measuring device 50 is performed in addition to the operations mentioned above. Specifically, operations such as (i) connecting particle feed unit 51 to inlet port 26 of internal combustion engine 20; (ii) installing lighting device 52 so as to form a laser sheet in measuring room 34; or (iii) installing capturing device 53 for capturing measuring room 34 through measurement window 39 are executed. When the installation of the measuring device 50 is completed, the settings in measuring devices 50 such as an irradiation timing of laser of lighting device and a capturing timing of capturing device 53.

First, the measuring step for measuring a flow field of the gas in the measuring room 34 will be discussed.

At this measuring step, the operation internal combustion engine 20, i.e. motoring operation is activated and a tracer particle is then supplied from particle feed unit 51 to intake air flowing inlet port 26 in the intake stroke of internal combustion engine 20. The tracer particle flows into combustion chamber 24 together with the intake air. Then, in the compression stroke, the tracer particle flows into measuring room 34 via plughole 25; connecting pipes 47; and penetration holes 44 and tubular component 42 of pillar component 48; together with the gas in combustion chamber 24 compressed by piston 23. The pressure of measuring room 34 becomes almost equal to the pressure of combustion chamber 24, and the pressure changes synchronously with the pressure of combustion chamber 24. Under this pressure condition, the flow field of gas is formed inside measuring room 34 by the target measurement gas that has flowed into measuring room 34 from two tubular components 42.

Lighting device 52 forms a laser sheet on measuring room 34 by irradiating a laser for a predetermined timing, for example, around the TDC (Top Dead Centre), e.g. from 10 deg before TDC to 10 deg after TDC. Capturing device 53 captures measuring room 34 synchronously with the irradiation timing of the laser of lighting device 52. Capturing device 53 photos a dispersion light from the tracer particle on the laser sheet.

Multiple image data outputted from capturing device 53 are stored in a memory of analysis device 54. Analysis device 54 divides each of the multiple image data stored in the memory to multiple inspection domains, and then calculates a local displacement vector of a tracer particle image statistically from a tracer particle image on each inspection domain of the image data at consecutive two capturing timings. The gas flow rate at the corresponding position is calculated from the local displacement vector. The partial flow velocity in each lattice point of measuring room 34 can be thus calculated using the PIV method.

The measuring step for measuring the flame propagation condition in measuring room 34 will be discussed.

At this measuring step, fuel is injected from the injector of internal combustion engine 20 in the intake stroke of internal combustion engine 20. Air-fuel mixture flows into combustion chamber 24. Air-fuel mixture of combustion chamber 24 compressed by piston 23 flows into measuring room 34 via plughole 25, connecting pipes 47, penetration holes 44 of pillar component 48, and tubular component 42 during the compression stroke. A high-voltage pulse is supplied to spark plug 45 at the TDC timing of internal combustion engine 20, and the target measurement gas is then ignited by spark plug 45. The flame that is ignited near spark plug 45 expands in measuring room 34. Capturing device 53 photos a propagation condition of the flame in a predetermined interval. Analysis device 54 analyzes the propagation condition of the flame based on multiple image data outputted from capturing device 53, and then outputs the analysis result.

### Advantage of the embodiment

This embodiment allows an installation of measuring chamber 31 above the internal combustion engine 20 and in the outside space of internal combustion engine 20 where a spatial limitation is small. Therefore, measuring chamber 31 can be attached conveniently to internal combustion engine 20.

Capturing device 53 can be installed conveniently in the position where spatial restriction is small because measuring chamber 31 equipped with measurement window 39 can be formed above internal combustion engine 20.

Further, the condition in combustion chamber of internal combustion engine 20 can be reproduced realistically because measuring chamber 31 is installed above internal combustion engine 20 in this embodiment and the communication between combustion chamber 24, which is the main combustion chamber, and measuring room 34 is not intercepted even when the piston reaches TDC.

### Other Embodiment

The following embodiments can be contemplated further.

The measuring device can be a device using LDV (Laser Doppler Velocity meter) in the above embodiment.

The internal combustion engine can be a diesel engine that has a plughole for attaching a glow plug formed therein in the above embodiment. In this case, the connection structure of the measuring implement connects an introductory passage to the plughole where the glow plug is not attached in the internal combustion engine. The glow plug, i.e. heating device, can be attached to the measuring chamber.

A plasma generating device for generating non-equilibrium plasma can be attached to the measuring chamber. The plasma generating device is, for example, a device that enlarges small plasma generated by a spark plug using microwave energy, and an antenna for radiating microwave is attached to the measuring chamber. A connection structure can be attached to the measuring chamber in the above embodiment, and the entrance of the introductory passage of the measuring chamber can be connected directly to the plughole.

The measuring implement can have an adjustment component that adjusts a dead volume considering that the dead volume is increased when the measuring room is connected to the combustion chamber via the introductory passage in the above embodiment. The adjustment component is fixed to a piston head, for example.

In the above embodiment, at least one of the multiple introductory passages can have a narrowing portion that narrows partially the cross-sectional channel size is.

### INDUSTRIAL APPLICABILITY

The present disclosure is applicable for measuring implements which are used for measurement for analyzing an internal combustion engine, for example.

### EXPLANATION OF REFERENCE NUMERALS

- 10: Measuring system
- 20: Internal combustion engine
- 24: Combustion chamber
- 25: Plughole
- 30: Measuring implement
- 31: Measuring chamber
- 32: Connection structure
- 34: Measuring room
- 35: Introductory passage
- 42: Tubular component
- 44: Penetration hole
- 45: Spark plug (plasma generating device)
- 46: Chamber side plughole (attachment structure)

## Claims

1. A measuring implement comprising:
a measuring chamber that forms therein a measurement room to where a target measurement gas flows in, and an introductory passage that introduces the target measurement gas to the measurement room; and
a connection structure that connects the introductory passage to a plughole, wherein the plughole is opened in a combustion chamber of an internal combustion engine where a plug is not installed in the plughole.

2. The measuring implement of the claim 1 wherein
the measuring chamber has a attachment structure for attaching (i) a plasma generating device that generates plasma in the measurement room or (ii) a heating device that heats the target measurement gas in the measurement room.

3. The measuring implement of the claim 2 wherein
the attachment structure is configured such that an ignition plug, as a plasma generation device, is attachable.

4. The measuring implement as claimed in one of the claims 1 to 3 wherein
the connection structure is a connection component that has a connection passage formed therein, wherein the connection passage is located between the internal combustion engine and the measuring chamber, and the connection passage connects the plughole and the introductory passage.

5. The measuring implement as claimed in one of the claims 1 to 4 wherein
the measuring chamber forms therein a plurality of the introductory passage.

6. The measuring implement as claimed in claim 5, wherein
the plurality of the introductory passages include introductory passages that have different cross-sectional channel sizes.

7. The measuring implement as claimed in claim 5, wherein
the plurality of the introductory passage includes a narrowing portion that narrows partially the cross-sectional channel size.

8. The measuring system comprising:
a measuring implement as claimed in one of claims 1 to 7; and
a measurement device that measures the target measurement gas in the measurement room.

9. The measuring method using a measuring chamber including a measurement room to where a target measurement gas flows therein, and an introductory passage which introduces the target measurement gas into the measurement room, the method comprises:
a preparation step that connects the introductory passage of the measuring chamber to a plughole where a plug is not installed in the plughole of an internal combustion engine, and connects a combustion chamber of the internal combustion engine and the measurement room via the plughole and the introductory passage; and
a measuring step that operates the internal combustion engine after the preparation step and measures the target measurement gas, wherein the target measurement gas is the gas in the combustion chamber that is introduced into the measurement room via the plughole and the introductory passage.
